(19) Europäisches Patentamt
European Patent Office
Office européen des brevets

(11) Publication number: **0 363 071 A2**

(12) **EUROPEAN PATENT APPLICATION**

(21) Application number: 89309845.9

(22) Date of filing: 27.09.89

(51) Int. Cl.[5]: C08L 83/08 , C08K 5/17 , C08G 77/26 , C08G 77/38

(30) Priority: 03.10.88 US 252473

(43) Date of publication of application: 11.04.90 Bulletin 90/15

(84) Designated Contracting States: BE DE FR GB

(71) Applicant: DOW CORNING CORPORATION
3901 S. Saginaw Road
Midland Michigan 48686-0994(US)

(72) Inventor: Himstedt, Alan Laverne
3111 Birchfield Drive
Midland Michigan, 48640(US)

(74) Representative: Laredo, Jack Joseph et al
Elkington and Fife Beacon House 113 Kingsway
London, WC2B 6PP(GB)

(54) **UV curable gels.**

(57) Compositions which cure to gels by exposure to ultraviolet radiation are made by blending a photoinitiator with an acrylamide functional polyorganosiloxane having 1 to 2 siloxane units which contain acylamide groups which can be acrylamide or a combination of acrylamide and acetylamide. The hardness of the gel can be adjusted by varying the ratio of acrylamide and acetylamide in the polyorganosiloxane where the harder gels have the highest percentage of acrylamide groups. The autoclave stability of the gels can be increased by including in the compositions a tertiary amine which neutralizes the by-produced acids from decomposition of the photoinitiators. These gels have low temperature flexibility, can be made with a durometer to fit the particular application and can be made to have autoclave stability. The gels are useful as encapsulants for electronic devices.

EP 0 363 071 A2

# UV CURABLE GELS

The electronic industry has a need for materials which cure at low temperatures and are useful for encapsulating devices to protect them from environmental and mechanical hazards. Devices used in the electronics industry are often sensitive to high temperatures, therefore, curing under conditions of low temperature is desirable. Damage to these devices can occur by either exposure to temperatures which are significantly high or exposure to somewhat lower temperatures for prolonged periods of time. Materials which cure by ultraviolet radiation in short periods of time might be useful for encapsulating the electronic devices if the other properties are suitable, for example, the hardness. Materials which are soft and resilient can be used to protect electronic devices from mechanical shock, such as soft gels. Devices once encapsulated need to withstand environmental attack, such as by heat and humidity. This means a material needs to insulate the device from the environment

It was, therefore, a goal to find a gel-like material which would provide the softness and resiliency to mechanically protect electronic devices where the degree of hardness could be tailored to fit the requirements of a particular device in a particular application. The material would need a rapid cure under conditions which would not cause the electronic device any harm. The cured material would need to protect the device from harmful effects of environment, such as heat and humidity.

A class of materials which seem to have certain favorable characteristics are described by Varaprath in U.S. Patent No. 4,608,270, issued August 26, 1986. This class of materials is acylamido silicon materials where those of particular interest to the inventor are those which react when exposed to ultraviolet radiation, i.e., those having acrylamide functionality. Varaprath teaches organosilicon compounds which contain at least one silicon-bonded acylamino-substituted hydrocarbon radical of the formula -QNAQ′NAZ and any remaining silicon-bonded radicals are organic radicals or divalent oxygen atoms linking silicon atoms. In the formula, each Q and Q′ is a divalent hydrocarbon radical, A is acryl or methacryl and Z is hydrogen atom or a monovalent hydrocarbon radical. These compounds can be silanes, siloxanes, silcarbanes and silcarbane siloxanes which contain at least one silicon atom which bears a hydrocarbon radical having an acrylated diamine group. The acrylated diamine silicon compounds can be made by reacting an organosilicon compound containing at least one acrylatable silicon-bonded amine-substituted hydrocarbon radical with an acryl halide in an aqueous alkaline system. Varaprath shows the preparation of acrylamide functional polyorganosiloxanes.

This invention relates to an ultraviolet radiation curable composition comprising an acrylamide functional polyorganosiloxane of the general formula

$$(CH_3)_3SiO(\overset{CH_3}{\underset{CH_3}{Si}}O)_x(\overset{C_6H_5}{\underset{CH_3}{Si}}O)_y(\overset{CH_3}{\underset{R-\underset{R'}{N}-CH_2CH_2-\underset{R'}{N}-R'}{Si}}O)_zSi(CH_3)_3$$

in which x is an average of at least 44 and has a value such that the mol percentage of dimethylsiloxane units in the polyorganosiloxane is from 88 to 94.5, y has an average value of at least 2.5 and has a value such that the mol percentage of methylphenylsiloxane units is from 5 to 10, z is at least 1 and less than 2, R is a divalent alkylene radical having 3 or 4 carbon atoms, each R′ is a hydrogen atom or an acyl radical of the formula

$$CH_2=CH-\overset{O}{\overset{\|}{C}}- \quad , \qquad CH_2=\underset{CH_3}{C}-\overset{O}{\overset{\|}{C}}- \qquad \text{or} \qquad CH_3\overset{O}{\overset{\|}{C}}-$$

where at least 15 percent of the R′ are

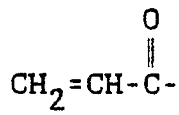 or 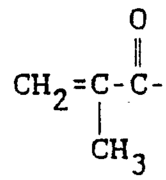 ,

and a curing amount of a photoinitiator.

This invention also relates to a method for making gels of varying hardness where the gel is cured by ultraviolet radiation comprising blending a photoinitiator with a acrylamide functional polyorganosiloxane such that the increase in the content of the acryl or methacryl increases the hardness of a gel cured by exposure to ultraviolet radiation and, thereafter, exposing the resulting blend to ultraviolet radiation, wherein the acrylamide functional polyorganosiloxane has the general formula

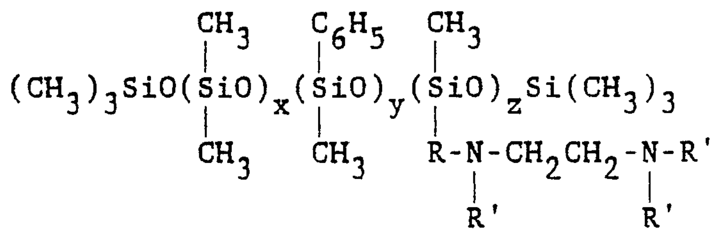

in which x is an average of at least 44 and has a value such that the mol percentage of dimethylsiloxane units in the polyorganosiloxane is from 88 to 94.5, y has an average value of at least 2.5 and has a value such that the mol percentage of methylphenylsiloxane units is from 5 to 10, z is at least 1 and less than 2, R is a divalent alkylene radical having 3 or 4 carbon atoms, each R′ is a hydrogen atom or an acyl radical of the formula

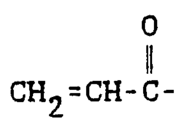 , 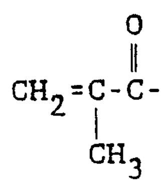 or 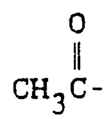

where at least 15 percent of the R′ are

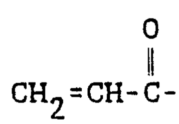 or 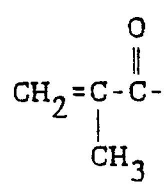 .

This invention also relates to a method of providing autoclave stability to a cured polyorganosiloxane composition which is cured by exposure to ultraviolet radiation comprising adding a tertiary amine in an amount sufficient to neutralize any acid by-products from the ultraviolet radiation decomposition of a photoinitiator which is in a curable composition comprising an acrylate, methacrylate or acrylamide functional polyorganosiloxane and a photoinitiator which produces acid by-products from ultraviolet radiation exposure and, thereafter, exposing the composition to ultraviolet radiation of sufficient dosage and of a wavelength of decompose the photoinitiator.

Compositions of the present invention cure to a material which will be termed "gel" and is characterized by the hardness and resiliency of the product. Gels of this invention vary in hardness, such as where the hardness is measured by a durometer value on the Shore OO scale and ranges from 5 to 55. The durometer with results given on the Shore OO scale is determined by the procedure described by ASTM-D-1084B. The compositions of this invention are cured by exposure to ultraviolet radiation and comprise an acrylamide functional polyorganosiloxane and a photoinitiator.

The acrylamide functional polyorganosiloxane useful for the compositions of this invention is one which has the general formula

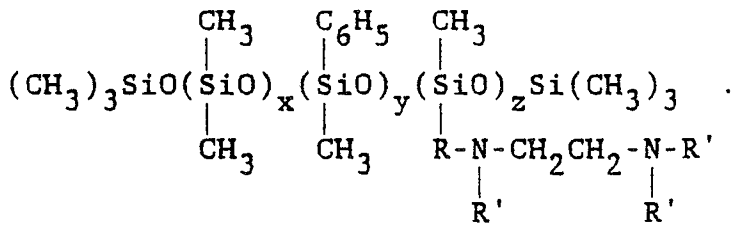

Within the limits described above for the polyorganosiloxane variables, both the viscosity and the reactivity can be tailored to fit a particular application. The presence of the methylphenylsiloxane units in the polyorganosiloxane give the gels a low temperature flexibility property (resiliency) which allows these gels to be used to encapsulate electronic devices which may be subjected to temperatures below -30° C. and where it is important that the gels remain resilient to protect the device.

The hardness of the gel can be varied by changing the amount of R′ in the polyorganosiloxane which is

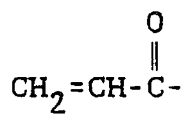 and 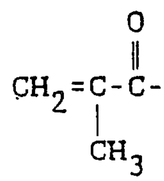

(for convenience, hereinafter these groups will be referred to as acryl and methacryl respectively) and the amount of R′ in the polyorganosiloxane which is

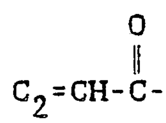 and 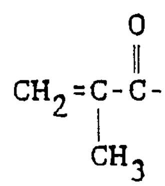

(for convenience, hereinafter this group will be referred to as acetyl). To allow the polyorganosiloxane to cure by exposure to ultraviolet radiation, the amount of R′ which is acryl or methacryl must be at least 15 percent of the total R′ groups with the remainder being hydrogen atoms or acetyl groups in a molecule of polyorganosiloxane. The softest gels (having the lowest Shore OO values) are those which are made from polyorganosiloxanes which have 15 percent of the total R′ as acryl and methacryl and the hardest materials are those which have the highest percentage of R′ as acryl and methacryl. Varying the ratio of acryl and methacryl to acetyl groups varies the hardness of the gels cured from compositions comprising polyorganosiloxane and photoinitiator. Increasing the percentage of acryl and methacryl groups in the polyorganosiloxane molecule increases the hardness. The hardness may also be effected by the value of z in the polyorganosiloxane and the hardest gels will be obtained from the polyorganosiloxanes which have the highest values of z and the highest percentage of R′ as acryl and methacryl. However, the change in hardness will be most effected by the percentage change in the ratio of acryl and methacryl groups to acetyl group in the molecule. The change in the value of z will only cause small changes in the hardness, because z must be maintained at a low value to give gel products with the appropriate degree of hardness and, therefore, is varied only a small amount, i.e., from 1 to less than 2. A preferred polyorganosiloxane has an average per molecule of about 33 percent hydrogen atom, 22 percent acryl group and 44 percent acryl group for R′. Another preferred polyorganosiloxane has an average per molecule of about 33 percent hydrogen atom and 67 percent acryl group for R′.

The siloxane units of the polyorganosiloxanes of the compositions of the present invention are 88 to

94.5 percent dimethylsiloxanes units, 5 to 10 mol percent methylphenylsiloxane units and 1 to less than 2 siloxane units which bear an acylamido functionality.

The acrylamide functional polyorganosiloxanes of this invention can be made using the process described by Varaprath. An amine functional polymer is first prepared by polymerizing polydimethylcyclosiloxanes, polymethylphenylcyclosiloxanes and a cyclic amino-functional polysiloxane of the formula

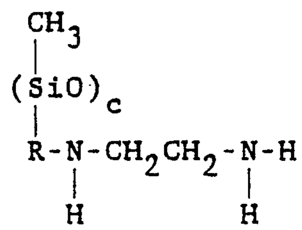

in which c has a value of from 3 to 6 inclusive and where the cyclosiloxanes are in the ratios to provide values of x, y and z defined above. The polymerization can be done with conventional polymerization techniques such as by heating the cyclosiloxanes with a basic catalyst such as potassium silanolate. The polymerization with potassium silanolate can be accomplished by heating at 150° C. for 3 hours at which time the polymerization reactions have reached equilibrium. The catalyst is then neutralized by suitable reagents such as by carbon dioxide or acetic acid and then the reaction product is filtered. The neutralized polymer has the formula

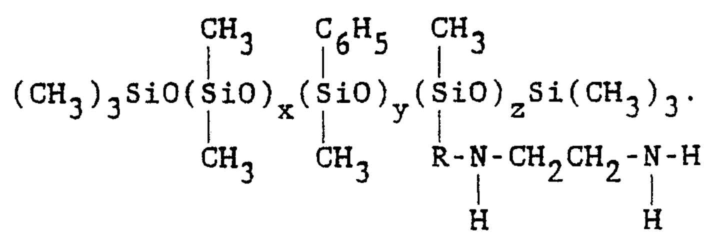

This polymer is then converted into the acrylamide functional polyorganosiloxane by reacting an excess of acyl chloride where the acyl chloride is either acryloyl chloride, methacryloyl chloride, a mixture of acryloyl chloride and acetyl chloride in the desired ratio, a mixture of methacryloyl chloride and acetyl chloride in the desired ratio or a mixture of acryloyl chloride, methacryloyl chloride and acetyl chloride in the desired ratio. This reaction is described by Varaprath which shows such reactions and details for variations. In the present invention, the acrylamide functional polyorganosiloxane is best made by reacting acyl chloride in the presence of sodium nitrite, sodium hydroxide and methylene chloride at less than 0° C. If all the R′ are to be acrylated (or methacrylated), an excess of at least 10 mol percent acyl chloride of the stoichometric amount would be used. The stoichometric amount is the amount necessary to provide one mole of acyl chloride per mole of active nitrogen bonded hydrogen in the polyorganosiloxane. After the reaction is completed, the residual water can be removed cooling with dry ice to freeze out the water and the solvent can be removed by using an evaporator.

Gels of various hardness can be obtained by selecting an acrylamide functional polyorganosiloxane with the appropriate ratio of acryl and/or methacryl functionality to acetyl functionality. An acrylamide functional polyorganosiloxane to provide a particular hardness is selected on the basis that the higher the content of acrylamide groups and/or methacrylamide groups in the polymer the harder the resulting gel will be. For example, the hardest gel will be obtained from compositions in which the acrylamide functional polyorganosiloxane is one where all the R′ groups are acryl and/or methacryl and the softest gels will be obtained from compositions in which the acrylamide functional polyorganosiloxane is one where at least 85 percent of the R′ groups are acetyl. The hardness will also vary with the value of z in the acrylamide functional polyorganosiloxane where z equal to one is the softer gels and z having a value approaching 2 will give the hardest gels. Once the appropriate acrylamide functional polyorganosiloxane is selected based on the desired hardness, then photoinitiator is added which will cause the acrylamide functional polyorganosiloxane to cure when exposed to ultraviolet radiation. Other ingredients may be considered but are not required for compositions which cure to a gel. One ingredient which was discovered to provide a special property to the cured gels is a tertiary amine, wherein the preferred species is 2-(diisopropylamino) ethanol. The tertiary

amine provides autoclave stability to the cured polyorganosiloxane composition when the photoinitiator is one which produces acid by-products when exposed to ultraviolet radiation. The term "autoclave stability" means conditions of high temperature and high humidity such as would be found in an autoclave, for example, conditions of 150° C. with 100 percent relative humidity. The amount of tertiary amine added to the composition is enough to neutralize the acid by-products from the decomposition of the photoinitiator.

The photoinitiator is preferably 2-hydroxy-2-methyl-1-phenylpropan-1-one. Other photoinitiators which might be used are known in the art to cure acrylamides. Such photoinitiators include 2,2-diethoxyacetophenone, benzoin methyl ether, benzoin ethyl ether, benzoin isopropyl ether, alpha-methylbenzoin, alpha-ethylbenzoin, alpha-methyl benzoin methyl ether, alpha-phenylbenzoin, alpha-allylbenzoin, anthraquinone, 2-bromoacetophenone, chloroanthraquinone, methylanthraquinone, 3-bromoacetophenone, ethylanthraquinone, tertiary butylanthraquinone, benzil, diacetyl, 4-bromoacetophenone, benzaldehyde, acetophenone, benzophenone, omega-bromoacetophenone, benzoin, 2,3-pentanedione, hydroxycyclohexylphenyl ketone, hydroxymethyl phenylpropanone, and xanthone. The photoinitiator is used in amounts which are suitable to provide cure of the composition when it is exposed to ultraviolet radiation. Although the amount of photoinitiator is not critical in this invention, the amounts can be varied from 0.5 to 10 parts by weight based on 100 parts by weight of the acrylamide functional polyorganosiloxane. The preferred amounts of photoinitiator are those from 1 to 4 parts by weight per 100 parts by weight of the acrylamide functional polyorganosiloxane. Suitable amounts can also be determined by exposing a film of 1/8th inch thickness for 20 seconds to a medium pressure mercury lamp which is one inch from the film and has an output of 200 watts per linear inch. A film exposed under these condition should become tack free and cured throughout.

The curable compositions of the present invention can be made by blending the acrylamide functional polyorganosiloxane with the photoinitiator. If the photoinitiator shows signs of incompatibility, the polyorganosiloxane can be heated slightly to improve the compatibility. However, it is preferred that compatible photoinitiators are used rather than having to manipulate the cold blending process. When a tertiary amine is used, it is also blended with the other components.

The compositions of the present invention cure to gels with a hardness of from 5 to 55 on the Shore OO scale of duromaters. The compositions cure by exposure to ultraviolet radiation. The dosage and wavelength of the ultraviolet radiation which will cure the composition will depend upon the particular photoinitiator selected. Conventional ultraviolet radiation curing equipment can be used to cure the compositions. The composition can be cured in short periods of time such as from 5 seconds to 30 seconds. The compositions cure in shorter periods of time than many other heat cured gels and thus the exposure to elevated temperatures during the curing cycle is avoided and the high levels of stress upon cooling is not generated. Such stress can cause destruction of the gel or breakage of bonds and delicate connectors in the devices. The resulting gels are useful for encapsulating electronic devices which need the resiliency provided by the gels of this invention. The gels of this invention have good thermal stability, but the stability becomes poor when both temperature and high humidity are present.

Another feature of the gels of this invention is that when a tertiary amine is used in the composition the gels will withstand autoclave conditions of temperature of up to 150° C. and high humidity, such as 100 % relative humidity. Ordinarily, amides are considered quite stable, however, when photoinitiator, such as 2-hydroxy-2-methyl-1-phenylpropan-1-one is irradiated with ultraviolet radiation, it breaks down to form a benzoyl radial. The benzoyl radical eventually forms benzaldehyde which is readily oxidized to benzoic acid in the atmosphere. In an oven at 150° C benzoic acid can easily sublime resulting in a stable gel. However, in an autoclave, the benzoic acid in combination with high levels of water results in hydrolysis of the amide linkage which is reflected in decomposition of the gel. One way of improving the autoclave stability is to subject the gel to heat aging until the benzoic acid is sublimed out of it. However, because the extra heat aging step is both costly and at the same time destructive to the articles using the gel, such a process is not desirable or in many applications not allowable. In the present invention, it is believed that the use of tertiary amine which will complex with the benzoic acid, stabilizes the gel under autoclave conditions of temperature and humidity. Although the use of a tertiary amine results in somewhat of a slower cure, the trade off for the increased autoclave stability is quite acceptable.

The compositions of the present invention cure in short periods of time such as in 15 to 20 seconds. Because the curing time is short, the devices are not exposed to high temperatures which can cause undesirable stresses on the components of the electronic devices which could result during the curing cycle. Thus, these gels can be used to provide environmental protection and vibrational damping and are extremely useful for encapsulation of electronic devices and connectors. The gels may be useful as conformal coatings.

The following examples are present for illustrative purposes and should not be construed as limiting the

invention which is properly delineated in the claims. In the examples, "part" or "parts" is part by weight and the viscosity was measured at 25° C. unless otherwise specified.

Example 1

In a reaction vessel equipped with means for heating, 24.43 moles of polydimethylcyclosiloxane, 2.11 moles of polymethylphenylcyclosiloxane, 0.199 moles of cyclic siloxane of the formula

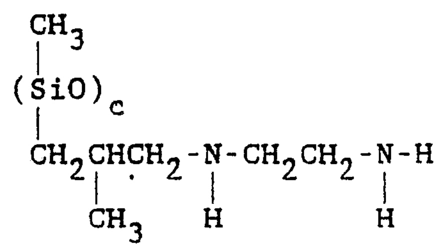

in which cyclic siloxane species were present in which c ranged from 3 to 6 inclusive, 0.194 mole of trimethylsiloxy endblocked polydimethylsiloxane having a viscosity of 2.0 centistokes and a potassium silanolate catalyst were placed and then heated for three hours at 150° C. Equilibrium was reached in this time period after which the catalyst was neutralized with acetic acid and then filtered. The resulting polymer had the following formula

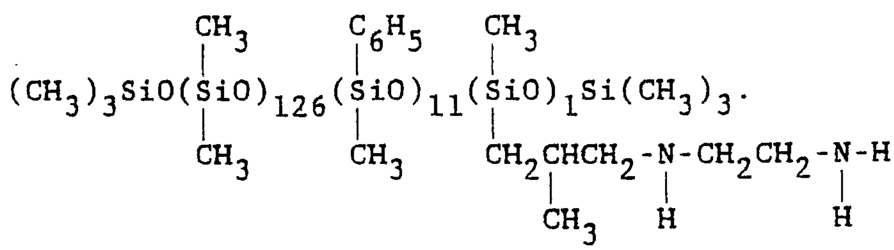

After determination of the amine neutralization equivalent, 732.3 grams of this polymer was converted to the acrylamide functional polyorganosiloxane (137.5 millimoles of nitrogen hydrogen) by reacting it with a 10 percent excess of acryloyl chloride (156.4 millimoles) in the presence of 37 ml of aqueous sodium nitrite (15 weight percent in water), 87 ml of 2 N sodium hydroxide (174 millimoles), 100 ml of deionized water and 2640 ml of methylene chloride below 0° C. The acryloyl chloride was in 60 ml of methylene chloride and was added to the mixture of other ingredients at a temperature betweeen 0° C. and -3° C. through an addition funnel over 38 minutes. The reaction mixture was stirred for 15 minutes after the addition was complete while maintaining the temperature below 0° C. Two phases resulted after the mixture set for 1.5 hours at room temperature, an aqueous phase and an methylene chloride phase. The resulting product phases were separated and the methylene chloride phase was placed in a dry ice chest overnight to freeze out any residual water. The ice was removed by filtration and then the methylene chloride was removed by a rotary evaporator at 50° C. with a pressure of 2 mm of Hg. The resulting polymer was a mixture in which the majority of the species had the average formula

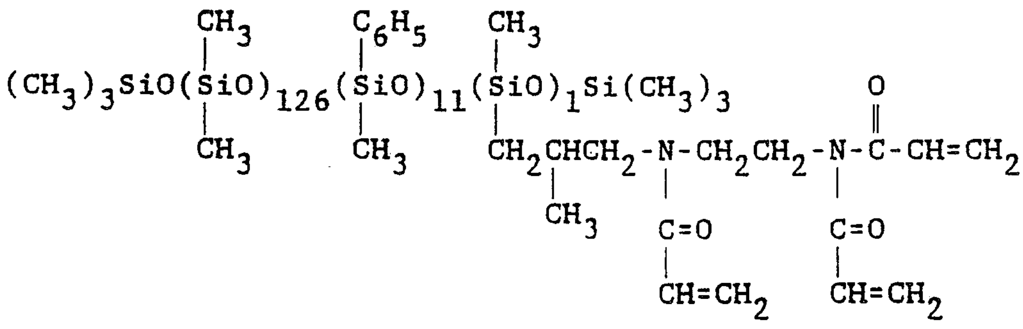

which is hereinafter referred to as Polymer A. Other species which may be present have the average formula

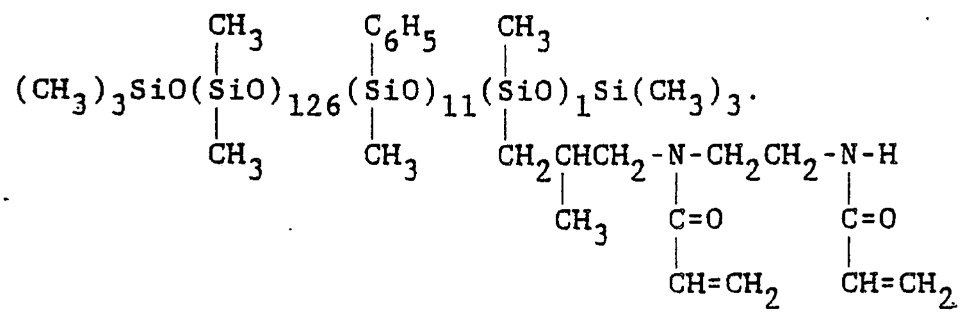

Another polymer was prepared as described above for Polymer A, except the acryloyl chloride was replaced with a molar ratio of acryloyl chloride (52.2 millimoles) to acetyl chloride (104.2 millimoles) of 1:2. The resulting polymer was a mixture of species in which the majority species had the average formula

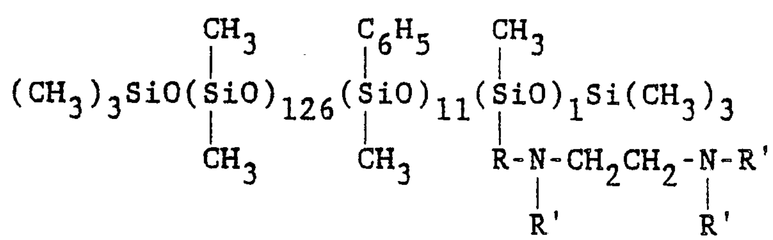

in which 1/3 of the R′ were acryl, 2/3 of the R′ were acetyl and hereinafter this polymer is referred to as Polymer B. Other species which may be present had the average formula

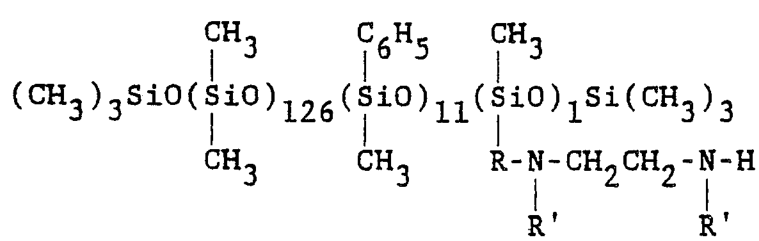

Gel compositions were prepared by mixing each of Polymer A and Polymer B with 2 weight percent 2-hydroxy-2-methyl-1-phenylpropan-1-one, Composition A and Composition B respectively. Other gel compositions were prepared by mixing each of Polymer A and Polymer B with 2 weight percent 2-hydroxy-2-methyl-1-phenylpropan-1-one and 1.8 weight percent of 2-(diisopropylamino)ethanol, Composition C and Composition D respectively.

Samples were cured by exposing the compositions to a medium pressure mercury vapor lamp in a

UVEXS LCU 750 D Curing Unit (manufactured by UVEXS Inc., Mountain View, California). This lamp emits ultraviolet radiation in the wavelength range of 200-400 nanometers and had an intensity of 113 $mJ/cm^2$-sec. The initial durometer on the Shore OO scale was determined by the procedure of ASTM-D-1084B after curing, the durometer was also determined after heating at 100 °C. for 4 days (condition 1), 16 hours at 121 °C. and 100 % relative humidity (condition 2) and at 150 °C. for 4 days followed by 18 hours at 121 °C. and 100 % relative humidity (condition 3). The results were as described in Table I which shows the cure times and the Shore OO durometers after the various conditions.

TABLE I

| COMPOSITION | CURE TIME, SEC. | INITIAL DUROMETER | DUROMETER AFTER CONDITION 1 | DUROMETER AFTER CONDITION 2 | DUROMETER AFTER CONDITION 3 |
|---|---|---|---|---|---|
| A | 15 | 25 | 44 | 15 | 38 |
| A | 60 | 54 | 38 | 2 | 38 |
| A | 80 | 46 | -- | 14 | -- |
| C | 80 | 39 | -- | 41 | -- |
| B | 15 | 9 | 10 | Liquid | 7 |
| B | 60 | 11 | 10 | Liquid | 9 |
| B | 20 | 15 | -- | 0 | -- |
| D | 20 | 6 | -- | 4 | -- |

Compositions C and D which contained the tertiary amine showed that they remain stable under autoclave conditions of temperature and humidity, even without being heated to drive off the by-produced benzoic acid from the photoinitiator. The gel softness was shown by the compositions containing the mixture of acetyl and acryl groups on the polymer, compare the durometers of Compositions B and D with Compositions A and C.

## Claims

1. An ultraviolet radiation curable composition comprising an acrylamide functional polyorganosiloxane of the general formula

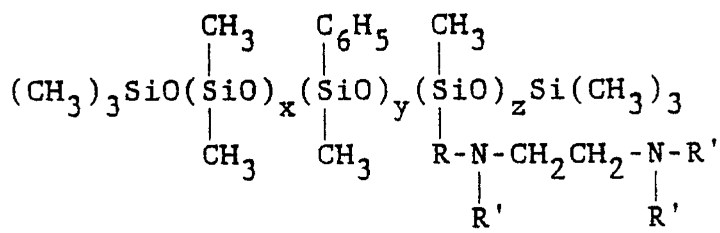

in which x is an average of at least 44 and has a value such that the mol percentage of dimethylsiloxane units in the polyorganosiloxane is from 88 to 94.5, y has an average value of at least 2.5 and has a value such that the mol percentage of methylphenylsiloxane units is from 5 to 10, z is at least 1 and less than 2, R is a divalent alkylene radical having 3 or 4 carbon atoms, each R′ is a hydrogen atom or an acyl radical of the formula

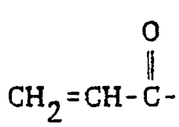 , 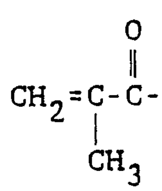 or 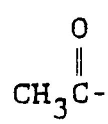

where at least 15 percent of the R′ are

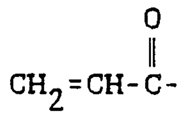 or 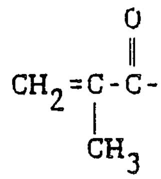 ,

and a curing amount of a photoinitiator.

2. The composition according to claim 1 further comprising a tertiary amine in an amount at least sufficient to neutralize acid by-products from the photoinitiator.

3. A method for making gels of varying hardness where the gel is cured by ultraviolet radiation comprising blending a photoinitiator with a acrylamide functional polyorganosiloxane such that the increase in the content of the acryl or methacryl increases the hardness of a gel cured by exposure to ultraviolet radiation and, thereafter, exposing the resulting blend to ultraviolet radiation, wherein the acrylamide functional polyorganosiloxane has the general formula

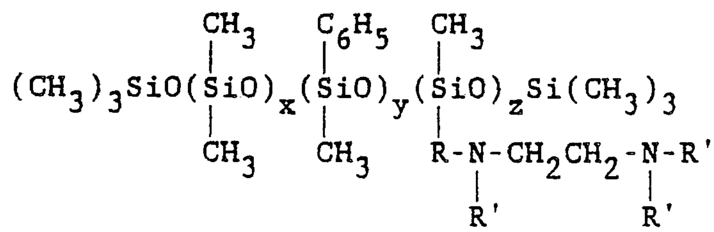

in which x is an average of at least 44 and has a value such that the mol percentage of dimethylsiloxane units in the polyorganosiloxane is from 88 to 94.5, y has an average value of at least 2.5 and has a value such that the mol percentage of methylphenylsiloxane units is from 5 to 10, z is at least 1 and less than 2, R is a divalent alkylene radical having 3 or 4 carbon atoms, each R′ is a hydrogen atom or an acyl radical of the formula

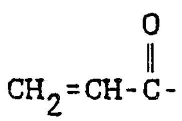 , 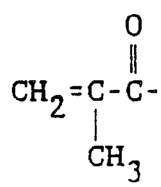 or 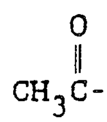

where at least 15 percent of the R′ are

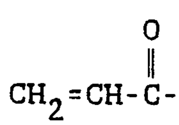 or 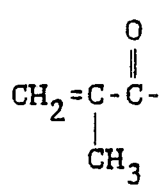 .

4. A gel obtained by the method according to claim 3.

5. A method of providing autoclave stability to a cured polyorganosiloxane composition which is cured by exposure to ultraviolet radiation comprising adding a tertiary amine in an amount sufficient to neutralize any acid by-products from the ultraviolet radiation decomposition of a photoinitiator which is in a curable composition comprising an acrylate, methacrylate or acrylamide functional polyorganosiloxane and a photoinitiator which produces acid by-products from ultraviolet radiation exposure and, thereafter, exposing

the composition to ultraviolet radition of sufficient dosage and of a wavelength to decompose the photoinitiator.